Europäisches Patentamt

European Patent Office

Office européen des brevets

(19)

(11) Publication number: **0 507 476 A2**

## EUROPEAN PATENT APPLICATION

(12)

(21) Application number: **92302436.8**

(22) Date of filing: **20.03.92**

(51) Int. Cl.⁵: **G11B 20/00, G11B 7/00**

(30) Priority: **04.04.91 JP 71788/91**

(43) Date of publication of application:
**07.10.92 Bulletin 92/41**

(84) Designated Contracting States:
**DE FR GB IT**

(71) Applicant: **NIKON CORPORATION**
**2-3, Marunouchi 3-chome Chiyoda-ku**
**Tokyo(JP)**

(72) Inventor: **Takagi, Akihiro**
**309-4-4, Nagayama 3-chome**
**Tama-shi, Tokyo(JP)**

(74) Representative: **Burke, Steven David et al**
**R.G.C. Jenkins & Co. 26 Caxton Street**
**London SW1H 0RJ(GB)**

(54) Information recording and reproducing apparatus.

(57) An information recording and reproducing apparatus suitable for real time recording and reproduction for a disk formatted in an MCAV system is provided.

In a reproduction mode, reproduced data is supplied to a buffer memory in synchronism with a clock signal whose frequency varies with a transfer speed of the reproduced data, and the reproduced data is outputted from the buffer memory in synchronism with a clock signal of a constant frequency. In this manner, the reproduced data of a constant transfer speed is produced. In a record mode, recording data is supplied to the buffer memory in synchronism with a clock signal of a constant frequency and it is outputted from the buffer memory in synchronism with a clock signal of a variable frequency, and it is recorded on the disk. In this manner, the recording data of the constant transfer speed is recorded on the disk formatted in the MCAV system.

*FIG. 1*

EP 0 507 476 A2

## BACKGROUND OF THE INVENTION

### Field of the Invention

The present invention relates to an information recording and reproducing apparatus which records or reproduces information to or from a disk-shaped information recording medium.

### Related Background Art

In general, a disk-shaped information recording medium has concentric or spiral information recording tracks formed thereon, and each track is divided into a plurality of sectors which are used as units for recording or reproducing information.

Various formats for recording data on an optical disk have been known and a representative one is a CAV system.

In the CAV system, the optical disk is rotated at a constant angular velocity and record pits are formed on a track at a constant recording frequency.

In this system, a reproducing frequency may also be constant and a processing circuit may be simple. However, a recording density in an outer periphery of the disk is lower than that in an inner periphery. Thus, a total storage capacity is small because a storage capacity per track cannot exceed the number of record pits which can be formed in the innermost track.

A CLV system is known as a system to increase the storage capacity. In this method, a drive motor is controlled such that a rotating speed is inversely proportional to a track radius to keep a constant track linear speed everywhere on the disk. This system requires a variable speed control of the motor and a complex circuit configuration. Further, when a track is sought, the rotating speed of the motor must always be changed in accordance with the position of the track to be reproduced from. Thus, a long time is needed until the rotation is stabilized and the accessing speed is low.

An MCAV system utilizes an advantage of easy rotation control of the CAV system and improves a disadvantage of small storage capacity. In the MCAV system, the outer the track to be accessed is, the higher is the recording frequency in order to increase the recording density.

A specification of a disk for the MCAV system is shown below.

| | |
|---|---|
| Diameter | 12 inches |
| Innermost track | 75 mm in radius |
| Outermost track | 147 mm in radius |
| Track density | 600 tracks/mm |
| Sectors per track | |

Table 1

| Zone # | Radius (mm) | No. of sectors per track |
|---|---|---|
| 1 | 75 ~ 81 | 50 |
| 2 | 81 ~ 87 | 54 |
| 3 | 87 ~ 93 | 58 |
| 4 | 93 ~ 99 | 62 |
| 5 | 99 ~105 | 66 |
| 6 | 105 ~111 | 70 |
| 7 | 111 ~117 | 74 |
| 8 | 117 ~123 | 78 |
| 9 | 123 ~129 | 82 |
| 10 | 129 ~135 | 86 |
| 11 | 135 ~141 | 90 |
| 12 | 141 ~147 | 94 |

Total number of sectors 6 x 600 x (50 + 54 + 58 + .... 90 + 94) = 3,110,400
Sector capacity 1 KB per sector
Storage capacity per disk 3.11 GB

A specification of a prior art information recording and reproducing apparatus of the MCAV system is shown below.

| | |
|---|---|
| Rotating speed | 1800 rpm |
| No. of heads | 1 |
| Storage capacity | 3.11 GB (per disk) |
| Transfer speed | 12.00 ~ 22.56 Mbits/sec |

EP 0 507 476 A2

Table 2

| Zone # | Radius (mm) | Transfer Speed (Mbits/sec) |
|---|---|---|
| 1 | 75 ~ 81 | 12.00 |
| 2 | 81 ~ 87 | 12.96 |
| 3 | 87 ~ 93 | 13.92 |
| 4 | 93 ~ 99 | 14.88 |
| 5 | 99 ~105 | 15.84 |
| 6 | 105 ~111 | 16.80 |
| 7 | 111 ~117 | 17.76 |
| 8 | 117 ~123 | 18.72 |
| 9 | 123 ~129 | 19.68 |
| 10 | 129 ~135 | 20.64 |
| 11 | 135 ~141 | 21.60 |
| 12 | 141 ~147 | 22.56 |

The transfer speed is a speed at which data read from the disk by a head and demodulated is transferred to a data processing circuit. In the MCAV system, the recording frequency is higher in the outer periphery of the optical disk. Thus, when the data is read, more data is read from the outer periphery in a given time if the rotating speed of the disk is constant. Accordingly, the outer the track from which the data is read is, the faster is the transfer speed.

In the information recording and reproducing apparatus of the MCAV system, the data transfer speed in the reproduction mode varies with the zone position of the disk from which the data is read by the head. Namely, the outer the track of the disk from which the data is read is, the faster is the transfer speed.

The same is true in the record mode. Namely, the data must be transferred at a transfer speed which varies with the zone position on the disk to which the data is recorded by the head.

Accordingly, the MCAV system cannot be used to the data which is to be recorded or reproduced on real time such as voice data or animation data.

## SUMMARY OF THE INVENTION

In the light of the above, it is an object of the present invention to provide an information recording and reproducing apparatus in the MCAV system which uses a plurality of heads to make it suitable to the real time recording and reproduction.

In order to achieve the above object, the information recording and reproducing apparatus of the present invention reproduces information from a disk having a plurality of concentric or spiral tracks and having a higher reproducing frequency as a track from which the signal is to be reproduced goes outer, while the disk is rotated at a constant rotating speed. A reproducing unit comprises a head for reading a signal recorded on the track of the disk, reproducing means for reproducing a first clock signal and data from the reproduced signal to produce the first clock signal and the reproduced data, and a buffer memory for reading in and storing the reproduced data in synchronism with the first clock signal and outputting the stored reproduced data in the order of read in synchronism with a second clock signal which is at a constant frequency.

A recording unit of the information recording and reproducing apparatus comprises a head for reading a signal recorded on the track of the disk to produce a reproduced signal, and receiving data to be recorded and recording it to the track of the disk, record area discrimination means for detecting identification information indicating a record position on the disk from the reproduced signal and producing a record area information signal indicating the record position, variable frequency oscillation means for producing a first clock signal of a variable frequency, and a buffer memory for reading in and storing the data to be recorded in synchronism with a second clock which is at a constant frequency and outputting the stored data to be recorded in the order of read to the head in synchronism with the first clock signal.

In the reproduction mode, since the frequency of the signal recorded on the disk is higher as the track

4

goes outer, the transfer speed of the reproduced signal from the head is faster as the track of the disk from which the signal is reproduced goes outer. The reproduced data and the first reproducing clock signal are generated based on the reproduced signal. The transfer speed of the reproduced data and the frequency of the first reproducing clock signal also vary with the transfer speed of the reproduced signal. The reproduced data is read into the buffer memory in synchronism with the first reproducing clock signal and stored therein. The reproduced data stored in the buffer memory is read in synchronism with the second reproducing clock signal which is at the constant frequency. Accordingly, the reproduced data read from the buffer memory has a constant transfer speed.

In the record mode, the record area discrimination means determines the position on the disk to which data is to be recorded, and the variable frequency oscillation means produces the first recording clock signal having the frequency varied in accordance with the position. The data to be recorded is written into the buffer memory in synchronism with the second recording clock signal which is at the constant frequency, and read in synchronism with the first recording clock signal. Accordingly, the data to be recorded which is read from the buffer memory has the transfer speed thereof varied in accordance with the position on the disk to which the data is to be recorded.

## BRIEF DESCRIPTION OF THE DRAWINGS

Fig. 1 shows a block diagram of a circuit configuration of a reproduced signal processing unit of an information recording and reproducing apparatus in accordance with an embodiment of the present invention,

Fig. 2 shows a block diagram of a circuit configuration of a recording signal processing unit of the information recording and reproducing apparatus in the embodiment of the present invention, and

Fig. 3 shows an elevational view of the information recording and reproducing apparatus in the embodiment of the present invention.

## DETAILED DESCRIPTION OF THE PREFERRED EMBODIMENTS

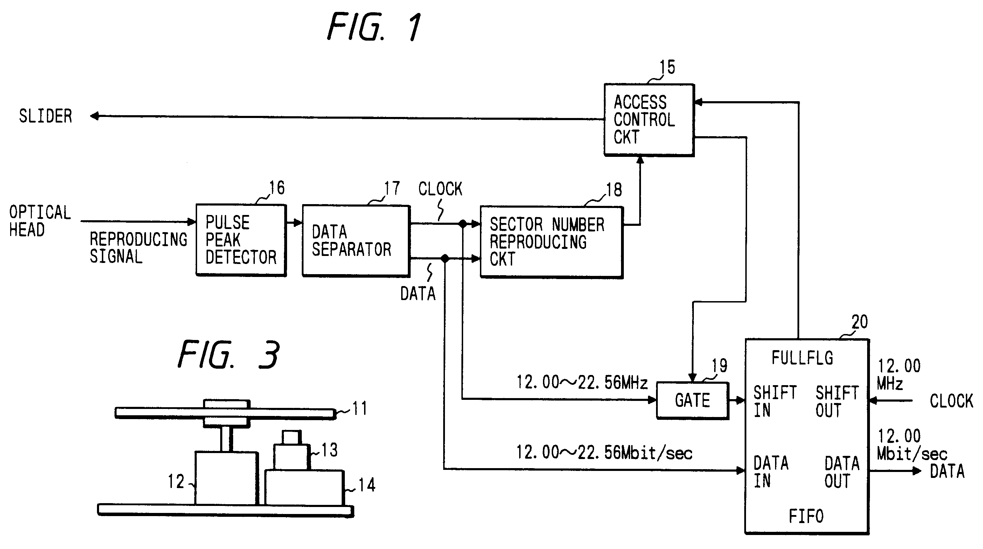

Fig. 1 shows a circuit configuration of a reproduced signal processing unit of the information recording and reproducing apparatus in accordance with one embodiment of the present invention. Fig. 3 shows an elevational view of the information recording and reproducing apparatus. The configuration and the reproducing operation of the reproduced signal processing unit of the present apparatus are now explained with reference to Figs. 1 and 3.

An optical disk 11 which is a recording medium is driven by a spindle motor 12. In the reproduction mode, an optical head 13 irradiates a laser beam onto the optical disk 11 and photo-electrically converts a reflected light therefrom to convert the recorded content of the optical disk 11 to an electrical signal, which is demodulated to produce a reproduced signal. In the record mode to be described later, the optical head 13 receives data to be recorded, modulates it and irradiates a stronger laser beam than the reproduction mode laser beam onto the optical disk 1 to record the signal.

The optical head 13 is mounted on a slider 14 which drives the optical head 13 radially of the optical disk 11.

An access control circuit 15 produces a control signal to the slider 14 so that the slider 14 is driven by the control signal to drive the optical head 13 to a desired track position on the optical disk 11.

The reproduced signal from the optical head 13 is supplied to a pulse peak detector 16 which produces a pulse signal (hereinafter referred to as reproduced data). The reproduced data is applied to a data separator 17 which extracts a clock for bit synchronization from the reproduced data and supplies the clock signal (hereinafter referred to as a first reproducing clock signal) together with the reproduced data.

As shown in Table 2, the transfer speed of the reproduced data varies with the radial position on the optical disk 11. Accordingly, the frequency of the first reproducing clock signal which is extracted from the reproduced data also varies with the transfer speed. The transfer speed of the reproduced data varies in a range of 12.00 ~ 22.56 Mbits/sec, and the frequency of the first reproducing clock signal which is extracted from the reproduced data as the bit synchronization signal varies in a range of 12.00 ~ 22.56 MHz.

The reproduced data from the data separator 17 and the first reproducing clock signal are supplied to a sector number reproduction circuit 18 and an FIFO 20. The sector number reproduction circuit 18 receives the reproduced data bit by bit at the input timing of the pulse of the first reproducing clock signal. It reads a sector number (sector address information inherently stored in each sector) in the reproduced data and supplies the sector number information to an access control circuit 15, which recognizes the sector to which the optical head 13 currently accesses based on the information.

The FIFO 20 is a first-in first-out type buffer memory. It receives a clock at a SHIFT IN terminal and data at a DATA IN terminal. It reads the data from the DATA IN terminal bit by bit in synchronism with the input timing of the clock pulse from the SHIFT IN terminal and stores it therein. The stored data is outputted from a DATA OUT terminal bit by bit in synchronism with the input timing of the clock pulse from a SHIFT OUT terminal. The order of data output is in the order of data input to the DATA IN terminal.

The reproduced data from the data separator 17 is applied to the DATA IN terminal of the FIFO 20, and the first reproducing clock signal is applied to the SHIFT IN terminal through a gate circuit 19 (which will be described later). The reproduced data is stored in the FIFO 20. The transfer speed when the reproduced data is applied to the DATA IN terminal of the FIFO 20 varies, but since the frequency of the first reproducing clock signal also varies with the transfer speed of the reproduced data as described above, it is synchronized with the first reproducing clock signal when the reproduced data is applied to the FIFO 20.

The reproduced data stored in the FIFO 20 is outputted from the DATA OUT terminal in synchronism with the second reproducing clock signal applied to the SHIFT OUT terminal of the FIFO 20. The frequency of the second reproducing clock signal is constant (12.60 MHz). Accordingly, the transfer speed of the reproduced data from the DATA OUT terminal is also constant (12.00 Mbits/sec). Preferably, the frequency of the second reproducing clock signal is equal to the lowest frequency of the first reproducing clock signal although it may be any frequency lower than the frequency of the first reproducing clock signal.

In this manner, the reproduced data with the varying transfer speed can be outputted as reproduced data with a constant transfer speed. The reproduced data from the FIFO 20 is sent to a host computer as user data through an interface circuit (not shown).

A signal (FULLFLG signal) outputted from a FULLFLG terminal of the FIFO 20 becomes active when more than 50 KB of reproduced data is stored in the FIFO 20. The FULLFLG signal is applied to an access control circuit 15, which outputs to a slider 14 a control signal to cause the optical head 13 to stay on the track when the FULLFLG signal becomes active, and outputs a control signal to the gate circuit 19 to close the gate circuit 19. (The stay-on means to stay the optical head 13 on one track.) As a result, the first reproducing clock signal is no longer applied to the FIFO 20 and the storing of the reproduced data into the FIFO 20 is interrupted. The timing at which the access control circuit 15 outputs the control signal to the gate circuit 19 is immediately after the reading of the sector being read. Accordingly, the interruption does not occur in the course of reading of the sector.

As seen from Table 1, the number of sectors per track of the optical disk 11 is 50 ~ 94, and the sector capacity is 1 KB/sector. Accordingly, the capacity of one track is 50 KB ~ 94 KB. When the FULLFLG signal becomes active, 50 KB of reproduced data has been stored in the FIFO 20. When the optical head 13 stays on the track, the reproduced data is not supplied to the FIFO 20 during at least one revolution of the optical disk 11. The amount of data reproduced during one revolution corresponds to the capacity of one track (50 KB ~ 94 KB). Since 50 KB of reproduced data has been stored in the FIFO 20, the reproduced data (user data) outputted from the FIFO 20 does not cease even if the input of the reproduced data is interrupted for one revolution. It is not necessary that the timing to make the FULLFLG signal active is at the time when the amount of reproduced data stored in the FIFO 20 reaches 50 KB but it may be a time when the amount is more than 50 KB.

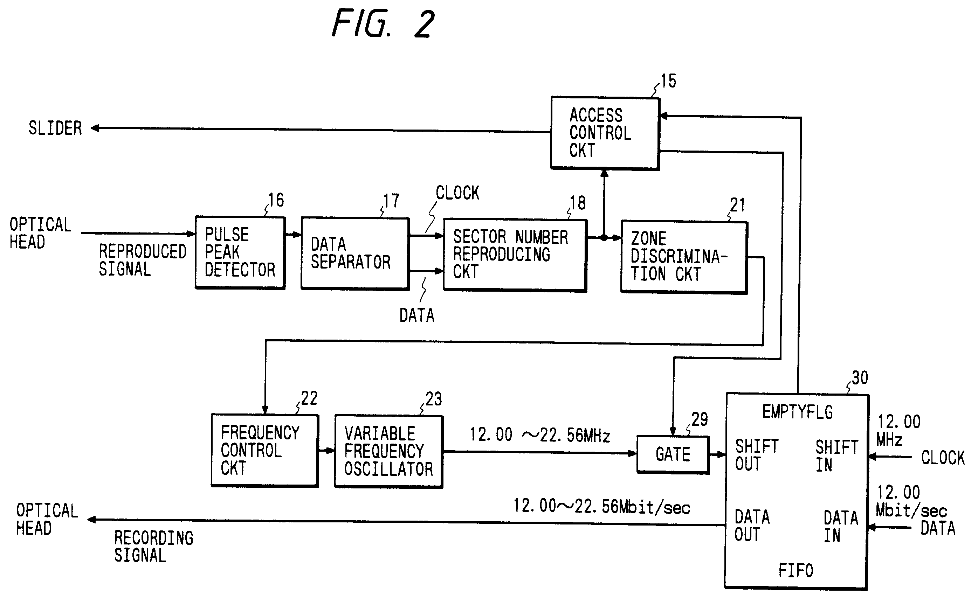

Fig. 2 shows a block diagram of a circuit configuration of the recording signal processing unit of the information recording and reproducing apparatus in accordance with the embodiment of the present invention. The configuration and operation of the recording signal processing unit of the present apparatus are now explained with reference to Figs. 2 and 3.

In Fig. 2, an access control circuit 15, a pulse peak detector 16, a data separtor 17 and a sector number reproducing circuit are identical to those shown in Fig. 1. A gate circuit 29 and an FIFO 30 function in the same manner as the gate circuit 19 and the FIFO 20 of Fig. 1 do.

Recording data from the user is applied to a DATA IN terminal of the FIFO 30 at the transfer speed of the zone 1 (12.00 Mbits/sec) shown in Table 2 from a host computer through an interface circuit (not shown) of the present information recording and reproducing apparatus, and stored in the FIFO 30. A frequency of a clock (second recording clock signal) applied to a SHIFT IN terminal of the FIFO 30 is constant at 12.00 MHz. Preferably, the frequency of the second recording clock signal is equal to the lowest frequency of the first recording clock signal to be described later although it may be any frequency lower than the frequency of the first recording clock signal.

In parallel with the writing of the recording data to the FIFO 30, the data is read to recognize the current position of the optical head 13 on the optical disk 11. The reproduced signal from the optical head 13 is processed by the pulse peak detector 16, the data separator 17 and the sector number reproducing circuit 18 in the same manner as it is processed in the reproducing unit (Fig. 1). The sector number information outputted by the sector number reproducing circuit 18 is supplied to a zone discrimination circuit 21, which

EP 0 507 476 A2

determines the zone to which the optical head 13 currently accesses and produces zone number information indicating the zone number shown in Table 2.

The zone number information is applied to a frequency control circuit 22, which produces a control signal in accordance with the zone number information so that a variable frequency oscillator 23 produces a clock at a frequency corresponding to the zone designated by the zone number (see Table 2). The variable frequency oscillator 23 produces the clock at the frequency corresponding to the zone number in accordance with the control signal from the frequency control circuit 22.

A relation between the zone number and the frequency of the clock outputted by the variable frequency oscillator 23 is shown in Table 3.

Table 3

| Zone # | Clock Frequency(MHz) |
|--------|----------------------|
| 1 | 12.00 |
| 2 | 12.96 |
| 3 | 13.92 |
| 4 | 14.88 |
| 5 | 15.84 |
| 6 | 16.80 |
| 7 | 17.76 |
| 8 | 18.72 |
| 9 | 19.68 |
| 10 | 20.64 |
| 11 | 21.60 |
| 12 | 22.56 |

A clock (first recording clock signal) produced by the variable frequency oscillator 23 is applied to a SHIFT OUT terminal of the FIFO 30 as a bit synchronization clock in reading the data, through the gate circuit 29. The recording data stored in the FIFO 30 is outputted from a DATA OUT terminal in synchronism with the input of the first recording clock signal. Since the frequency of the first recording clock signal varies in a range of 12.00 ~ 22.56 MHz, the transfer speed of the recording data outputted from the FIFO 30 can be varied in a range of 12.00 ~ 22.56 Mbits/sec.

A signal (EMPTYFLG signal) outputted from an EMPTYFLG terminal of the FIFO 30 becomes active when the recording data in the FIFO 30 is less than 2 KB. The EMPTYFLG signal is applied to the access control circuit 15. When the EMPTYFLG signal becomes active, the access control circuit 15 outputs a control signal to the slider 14 to cause the optical head 13 to stay on the track and outputs a control signal to the gate circuit 29 to close the gate circuit 29. As a result, the first recording clock signal is no longer applied to the FIFO 30 and the output of the recording data from the FIFO 30 is interrupted. The timing at which the access control circuit 15 outputs the control signal to the gate circuit 29 is immediately after the writing of the sector being written. Accordingly, the interruption does not occur in the course of writing to the sector. Since the capacity of one sector is 1 KB and the EMPTYFLG signal becomes active when the recording data in the FIFO 30 is less than 2 KB, at least one sector of recording data is in the FIFO 30. Accordingly, the recording data in the FIFO 30 is not exhausted during the writing of the recording data from the activation of the EMPTYFLG signal to the end of the writing to the current sector.

As described above, the access control circuit 15 outputs the control signals to the gate circuit 29 and the slider 14 and stores the sector number when the recording is interrupted. When the recording data stored in the FIFO 30 is more than 2 KB, the EMPTYFLG signal from the FIFO 30 becomes inactive so that the access control circuit 15 releases the control signals outputted to the gate circuit 29 and the slider 14 to resume the recording. The access control circuit 15 controls the timing to release the control signal so that the recording data is not read from the FIFO 30 until the optical head 13 reaches the sector of the next sector number to the stored sector number.

In this manner, the recording data of the user which is inputted at the constant transfer speed can be transferred to the optical head 13 at the transfer speed which varies with the zone to which the record is to be recorded.

While various numeric data have been shown in the present embodiment to explain the specification, the present invention is not limited to those numeric data.

Where an FIFO which produces both EMPTYFLG signal and FULLFLG signal is used, it may be shared

7

by the reproducing unit FIFO 20 and the recording unit FIFO 30. Where the second reproducing clock signal and the second recording clock signal are equal, those clock signals may be produced by one clock signal generator.

While the optical disk is used as the recording medium in the present embodiment, other disk-shaped recording medium (such as a magnetic disk) may be used.

The recording and reproduction in the MCAV system has been explained in the present embodiment, when the present embodiment is applied to a disk of the CLV system (for example, CD, CD-ROM, CD-I or DVI) which is rotated at a constant rotating speed (rotating speed at an innermost track), the reproduced data can be read at a constant transfer speed. In this case, the recording or reproducing frequency is continuously variable (in the present embodiment, it is variable zone by zone), but a fundamental configuration is same as that of the present embodiment.

In accordance with the present invention, the reproduced data from the disk of the MCAV system can be read as the data of the constant transfer speed. In the record mode, the recording data is transferred at the constant transfer speed. Accordingly, the present invention is applicable to an application which requires real-time recording and reproduction.

Further, since the rotating speed of the disk is constant, the access speed may be increased. In addition, the storage capacity is high because of the MCAV system.

The invention is applicable to recording media in which information is recorded on a disk in a plurality of concentric tracks or at least one spiral track. For convenience of terminology, each substantially circular portion of a spiral track is referred to herein as if it were an individual track.

**Claims**

1. An information recording and reproducing apparatus for reproducing information from a disk having a plurality of concentric or spiral tracks at a constant rotating speed, signals recorded on said tracks being reproduced at a higher reproducing frequency on an outer disk than on an inner disk, said apparatus comprising:

   a head for reading a signal recorded on the track of said disk to produce a reproduced signal;

   reproduction means for preparing a first clock signal and reproduced data from the reproduced signal to output the first clock signal and the reproduced data; and

   a buffer memory for reading in and storing the reproduced data in synchronism with the first clock signal and outputting the stored reproduced data in the order of read in synchronism a second clock signal of a constant frequency.

2. An information recording and reproducing apparatus according to Claim 1 wherein said disk is an optical disk.

3. An information recording and reproducing apparatus according to Claim 1 wherein a frequency of the second clock signal is no higher than a lowest frequency of the first clock signal.

4. An information recording and reproducing apparatus according to Claim 1 further comprising control means for inhibiting the reading of the reproduced data into said buffer memory when the amount of reproduced data stored in said buffer memory is larger than a predetermined level.

5. An information recording and reproducing apparatus according to Claim 4 wherein said predetermined level is no lower than a minimum storage capacity per track of said disk.

6. An information recording and reproducing apparatus according to Claim 1 further comprising control means for blocking the input of the first clock signal to said buffer memory when the amount of reproduced data stored in said buffer memory is larger than a predetermined level.

7. An information recording and reproducing apparatus according to Claim 6 wherein said predetermined level is no lower than a minimum storage capacity per track of said disk.

8. An information recording and reproducing apparatus according to Claim 1 further comprising slider for mounting said head thereon such that said head is movable radially of said disk.

9. An information recording and reproducing apparatus according to Claim 8 further comprising control

EP 0 507 476 A2

means for inhibiting the movement of said head when the amount of reproduced data stored in said buffer memory is larger than a predetermined level.

10. An information recording and reproducing apparatus according to Claim 9 wherein each track of said disk is divided into sectors, and said control means inhibits the movement of said head after the completion of reading of a signal from one sector by the head.

11. An information recording and reproducing apparatus for reproducing information from a disk having a plurality of concentric or spiral tracks at a constant rotating speed, signals recorded on said tracks being reproduced at a higher reproducing frequency on an outer disk than on an inner disk, said apparatus comprising:

a head for reading a signal recorded on the track of said disk to produce a reproduced signal and receiving data to be recorded to record the data on the track of said disk;

record area discrimination means for detecting identification information indicating a record position on said disk from the reproduced signal and producing a record area information signal indicating the record position;

variable frequency oscillation means for producing a first clock signal of a variable frequency in accordance with the record area information signal; and

a buffer memory for reading in and storing the data to be recorded in synchronism with a second clock signal of a constant frequency and outputting the stored data to be recorded in the order of read-in in synchronism with the first clock.

12. An information recording and reproducing apparatus according to Claim 11 wherein said disk is an optical disk.

13. An information recording and reproducing apparatus according to Claim 11 wherein a frequency of the second clock signal is no higher than a lowest frequency of the first clock signal.

14. An information recording and reproducing apparatus according to Claim 11 further comprising control means for inhibiting the reading of the data to be recorded into said buffer memory when the amount of data to be recorded stored in said buffer memory is larger than a predetermined.

15. An information recording and reproducing apparatus according to Claim 11 further comprising control means for blocking the input of the first clock signal to said buffer memory when the amount of data to be recorded stored in said buffer memory is larger than a predetermined level.

16. An information recording and reproducing apparatus according to Claim 11 further comprising slider for mounting said head thereon such that said head is movable radially of said disk.

17. An information recording and reproducing apparatus according to Claim 16 further comprising control means for inhibiting the movement of said head when the amount of data to be recorded stored in said buffer memory is larger than a predetermined level.

18. An information recording and reproducing apparatus according to Claim 17 wherein each track of said disk is divided into sectors, and said control means inhibits the movement of said head after the completion of reading of a signal from one sector by the head.

19. An information reproducing apparatus for reproducing information from a disk on which information is recorded at a higher spatial density in the outer regions of the disk than in the inner regions thereof, the apparatus including a head for reproducing information at a variable radial position on the disk while the disk is rotating, a buffer memory for receiving the read information, means for clocking the information into the buffer at a rate which varies with said radial position and means for clocking the information out of the buffer memory at a constant rate.

20. An information recording apparatus for recording information on a disk such that the information is recorded at a higher spatial density in the outer regions of the disk than in the inner regions thereof, the apparatus including a head for recording information at a variable radial position on the disk while the disk is rotating, a memory for storing information to be recorded on the disk, and means for clocking

9

the information from the memory at a rate which varies with said radial position and for supplying the information thus read from the memory to said head.

## FIG. 1

SLIDER ←

**ACCESS CONTROL CKT** /15

OPTICAL HEAD →

REPRODUCING SIGNAL →

**PULSE PEAK DETECTOR** /16 → **DATA SEPARATOR** /17

CLOCK

**SECTOR NUMBER REPRODUCING CKT** /18

DATA

**FULLFLG** /20

12.00~22.56MHz → **GATE** /19

12.00 MHz

SHIFT IN    SHIFT OUT ← CLOCK

12.00~22.56Mbit/sec → DATA IN    DATA OUT → 12.00 Mbit/sec DATA

**FIFO**

## FIG. 3

/11

/13

12 /   /14

EP 0 507 476 A2

FIG. 2